# EUROPEAN PATENT APPLICATION

(11) **EP 4 729 253 A1**
(43) Date of publication of application: **22.04.2026**
(21) Application number: 25207452.1
(22) Date of filing: 08.10.2025
(51) Int. Cl.: B26D 1/00, B26D 1/547, B26D 1/553, B26D 9/00, B26D 11/00

(54) **APPARATUS FOR NOTCHING AN ELECTRODE PLATE**

(30) Priority: 16.10.2024 KR 20240141252
(71) Applicant: SAMSUNG SDI CO., LTD., Yongin-si, Gyeonggi-do 17084 (KR)
(72) Inventor: KIM, Sangjin, 17084 Yongin-si (KR)
(74) Representative: Maiwald GmbH

(57) **Abstract**

The present disclosure provides an apparatus for notching and a method for notching. The apparatus for notching includes at least one wire cutter that cuts at least one of a first side surface and a second side surface positioned opposite to the first side surface and at least one pattern cutter that cuts at least one of the first side surface and the second side surface to form a cut pattern, and the wire cutter is disposed to face the electrode plate along the first direction.

## Description

### BACKGROUND

### FIELD

The present disclosure relates to an apparatus for notching and a method for notching used in a process of manufacturing a secondary battery.

### Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

An electrode assembly has a structure in which an electrode and an isolation film are alternately stacked. The electrode may be made by forming an electrode tab on an electrode plate, with the electrode tab being cut in a notching process to a small width fit for a cell standard. In general, the notching process may be performed by a method using a die and a method using a laser. In the process for notching using a die, a die is used repetitively, and, thus, abrasion may occur in the die, which may thereby cause problems with respect to the quality of the electrode plate. Moreover, in a case where the cell standard is changed, a new die may be needed to meet the new cell standard. On the other hand, a notching process using a laser has a problem in that it cannot be used for an electrode plate containing particular materials (for example, Fe and the like).

The above information disclosed in this Background section is for enhancement of understanding of the background of the present disclosure, and therefore, it may contain information that does not constitute related (or prior) art.

### SUMMARY

An apparatus for notching according to one or more example embodiments may be used to manufacture an electrode plate by a notching process that does not include the use of a die or a laser.

A method of notching according to one or more example embodiments may manufacture an electrode plate using by notching but not using a die or a laser.

These and other aspects and features of the present disclosure will be described in or will be apparent from the following description of embodiments of the present disclosure.

An apparatus for notching according to one or more embodiments of the present disclosure includes at least one wire cutter that is configured to cut at least one of a first side surface of an electrode plate and a second side surface of the electrode plate that is positioned opposite to the first side surface, with the cutting being along a direction in which the electrode plate moves in the apparatus, and at least one pattern cutter that is configured to cut at least one of the first side surface and the second side surface to form a cut pattern in the electrode plate, and the wire cutter is positioned to face the electrode plate along the direction in which the electrode plate moves.

According to one or more embodiments, a cutting edge of the wire cutter may be positioned to extend in a thickness direction of the electrode plate.

According to one or more embodiments, the wire cutter may include a first wire cutter that is configured to cut the first side surface and a second wire cutter that is spaced from the first wire cutter and is configured to cut the second side surface, and the distance between the first wire cutter and the second wire cutter may be adjustable.

According to one or more embodiments, the wire cutter may be configured to cut at least a part of an uncoated portion of the electrode plate from at least one of the first side surface and the second side surface, and the pattern cutter may be configured to cut at least one of the uncoated portion of the electrode plate disposed on at least one of the first side surface and the second side surface and a mixture portion that is between the uncoated portion.

According to one or more embodiments, the wire cutter may be disposed to be fixed while the electrode is moving.

According to one or more embodiments, each of the wire cutter and the pattern cutter may include at least one of metal, carbon steel, stainless steel, ceramic, and diamond.

According to one or more embodiments, the pattern cutter may be configured move at a same speed as the electrode plate in the direction that the electrode plate moves.

According to one or more embodiments, the pattern cutter may include a first pattern cutting element that is configured to cut the electrode plate in a second direction and a second pattern cutting element that is configured to cut the electrode plate in the first direction or a third direction.

According to one or more embodiments, the first pattern cutting element may be configured to face a side surface of the electrode plate along the second direction, and the second direction may intersect a thickness direction of the electrode plate.

According to one or more embodiments, a cross-sectional shape of the wire cutter may be (i) triangular, (ii) a shape in which one side of a triangle is replaced with a curve, or (iii) a polygon shape with an acute angle, and one side of the wire cutter may be parallel to the first direction.

According to one or more embodiments, the pattern cutter may include a plurality of saw teeth that are triangular or a shape in which one side of a triangle is replaced with a curve.

According to one or more embodiments, the pattern cutter may include a first pattern cutter and a second pattern cutter, and the second pattern cutter may form a second cut pattern by cutting a first cut pattern formed by the first pattern cutter.

According to one or more embodiments, a cross-section shape of the pattern cutter may be an isosceles triangle or a right triangle.

A secondary battery according to one or more embodiments of the present disclosure includes at least one wire cutter that is configured to cut a first side surface of an electrode plate and a second side surface of the electrode plate that is opposite to the first side surface, with the cutting being along a first direction in which the electrode plate moves in the apparatus and at least one pattern cutter that is configured to cut at least one of the first side surface and the second side surface to form a cut pattern, the wire cutter is positioned to face the electrode plate along the first direction, a cutting edge of the wire cutter is configured to extend in a thickness direction of the electrode plate, the wire cutter includes a first wire cutter that is configured to cut the first side surface and a second wire cutter that is spaced a distance from the first wire cutter and cuts the second side surface, the distance between the first wire cutter and the second wire cutter is adjustable, and the pattern cutter includes a first pattern cutting element that cuts the electrode plate along a second direction and a second pattern cutting element that cuts the electrode plate along the first direction or a third direction that is different from the second direction.

A method for notching according to one or more embodiments of the present invention to resolve the above technical tasks includes a first step of cutting an uncoated portion disposed on at least one of a first side surface of an electrode plate and a second side surface of the electrode plate that is positioned opposite to the first side surface, the cutting being along a direction that the electrode plate moves, the cutting being performed by using at least one wire cutter, and a second step of removing at least one of the uncoated portion disposed on one of the first side surface and the second side surface and a mixture portion, the removing being performed by using at least one pattern cutter to thereby form a cut pattern.

According to one or more embodiments, the wire cutter may be fixed to face the electrode plate along the first direction.

According to one or more embodiments, a cutting edge of the wire cutter may extend in a thickness direction of the electrode plate, the wire cutter may include a first wire cutter that cuts the first side surface and a second wire cutter that is spaced at a distance from the first wire cutter and cuts the second side surface, and a distance between the first wire cutter and the second wire cutter may be adjustable.

According to one or more embodiments, the method for notching may further include, before the first step, a step of adjusting the distance between the first wire cutter and the second wire cutter based a width of the electrode plate that intersects the first direction.

According to one or more embodiments, the first step may further include a step of adjusting a distance between the first wire cutter and the second wire cutter based on the width of the electrode plate that intersects the first direction.

According to one or more embodiments, the pattern cutter may include a first pattern cutting element that cuts the electrode plate along the second direction and a second pattern cutting element that cuts the electrode plate along the first direction or a third direction that is different from the second direction.

According to one or more embodiments, the method for notching may further include, before the first step, a step of adjusting a length by which the pattern cutter performs the cutting such that at least one of a shape or an interval of the cut pattern is adjusted.

The apparatus for notching according to one or more example embodiments performs notching on the electrode plate without a die,. Thus, it is possible to prevent a process error that may occur due to abrasion of a die.

The apparatus for notching according to one or more example embodiments performs notching on the electrode plate without a die. Thus, it is possible to adjust a manufacturing to a new electrode standard without providing a new die.

The method for notching according to one or more example embodiments performs notching on the electrode plate without using a die. Thus it is possible to reduce errors of the electrode plate manufacturing process and to maintain the quality of the electrode plate.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
Fig. 1 is a view of an electrode plate manufacturing apparatus used in a process of manufacturing a secondary battery according to one or more example embodiments.
Fig. 2a is a perspective view of an apparatus for notching according to one or more example embodiments.
Fig. 2b is a perspective view of an apparatus for notching according to other example embodiments.
Fig. 3a is a plan view of notching an electrode plate having one width by an apparatus for notching according to one or more example embodiments.
Fig. 3b is a plan view of notching an electrode plate having the other one width by an apparatus for notching according to one or more example embodiments.
Fig. 3c is a plan view of fixing a part of an uncoated portion cut in a process of notching an electrode plate by an apparatus for notching according to one or more example embodiments.
Fig. 4a is a plan view an electrode plate notched by an apparatus for notching according to one or more example embodiments.
Fig. 4b is a plan view of an electrode plate notched by an apparatus for notching according to one or more example embodiments.
Figs. 5a to 5g are views of a wire cutter included in an apparatus for notching according to one or more example embodiments.
Figs. 6a to 6d are views of a pattern cutter included in an apparatus for notching according to one or more embodiments.
Fig. 7a is a view of an apparatus for notching according to one or more embodiments.
Fig. 7b is a view of an apparatus for notching according to other example embodiments.
Fig. 8 is a plan view of notching an electrode plate by an apparatus for notching including a plurality of pattern cutters according to one or more example embodiments.
Fig. 9 is a perspective view of an apparatus for notching according to another example embodiment.
Fig. 10 is a plan view of notching an electrode plate by an apparatus for notching according to another example embodiment.
Fig. 11 is a flow chart of a method for notching according to one or more example embodiments.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

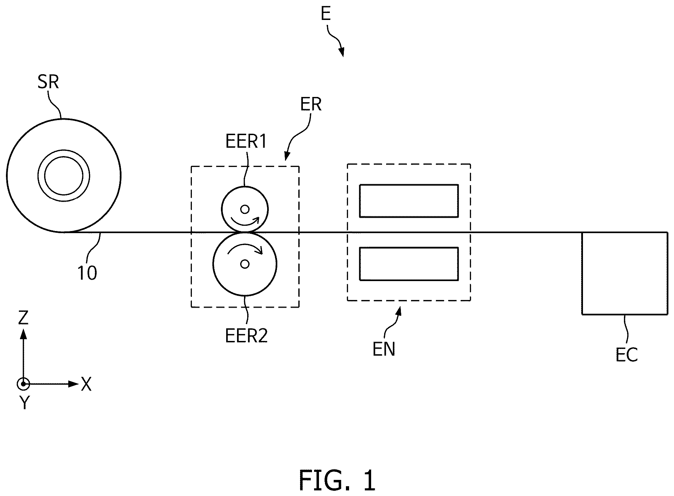

Fig. 1 is a view of an electrode plate manufacturing apparatus for a secondary battery according to one or more example embodiments.

Referring to Fig. 1, an electrode plate manufacturing apparatus E may include a supply roll SR that supplies an electrode plate 10, a rolling portion ER, a notching portion EN, and a collection portion EC. The electrode plate 10 supplied by the supply roll SR may be a substrate on which an active material layer has been already coated. The active material layer in the electrode plate 10 may be coated on one or both surfaces of the substrate. The rolling portion ER rolls the active material layer coated on the substrate of the electrode plate 10 by passing the electrode plate 10 between two rollers ERR1, ERR2 and thereby can make a thickness and a surface of the electrode plate 10 uniform and flat.

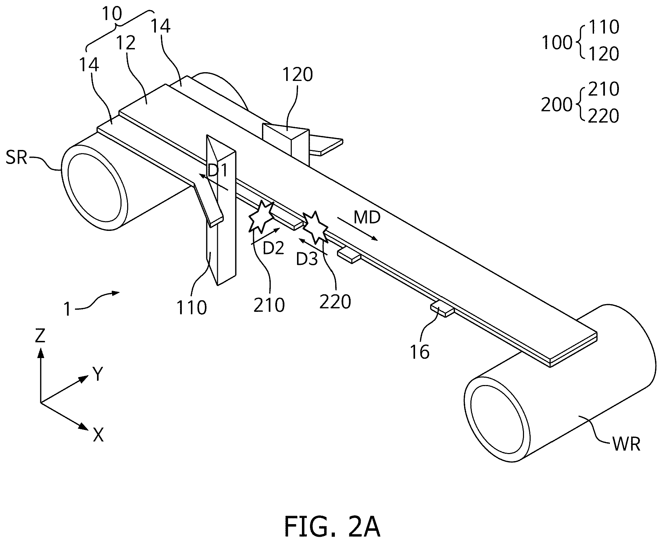

The electrode plate 10 that has passed through the rolling portion ER may be notched in the notching portion EN. For example, the notching portion EN may form a tab portion by cutting or punching an uncoated portion on which the active material layer is not coated on the electrode plate 10. For this, the notching portion EN may include a wire cutter that cuts at least one of the side surfaces of the electrode plate 10 along a direction in which the electrode plate 10 moves in the manufacturing apparatus E. The notching portion EN may include a pattern cutter that cuts at least one of the side surfaces of the electrode plate 10 to form a cut pattern corresponding to the tab portion. A detailed configuration of the apparatus for notching corresponding to the notching portion EN will be described below with reference to Figs. 2a to 10.

The collection portion EC may store or accommodate the electrode plate 10 notched by the notching portion EN. The collection portion EC may include various elements such as a winding roll WR or a magazine depending on the type of the secondary battery.

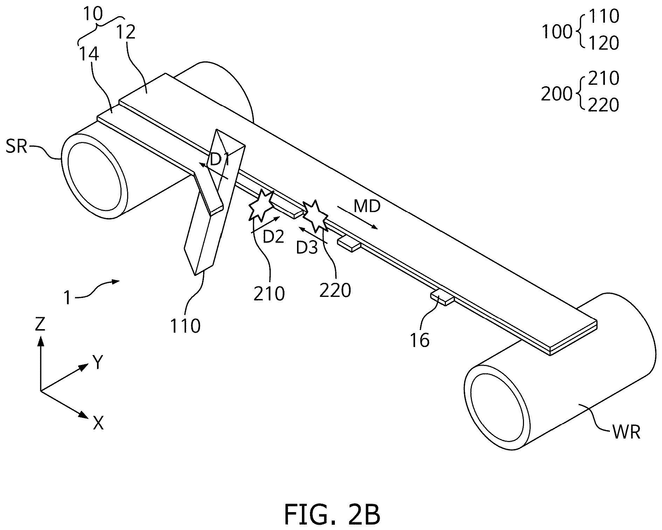

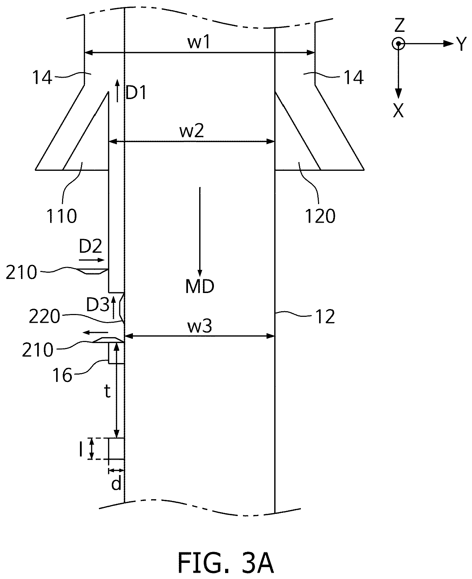

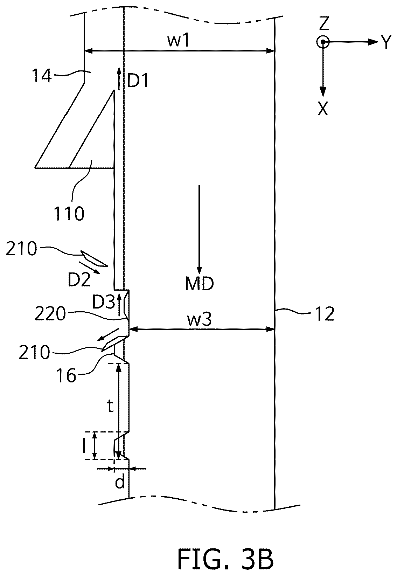

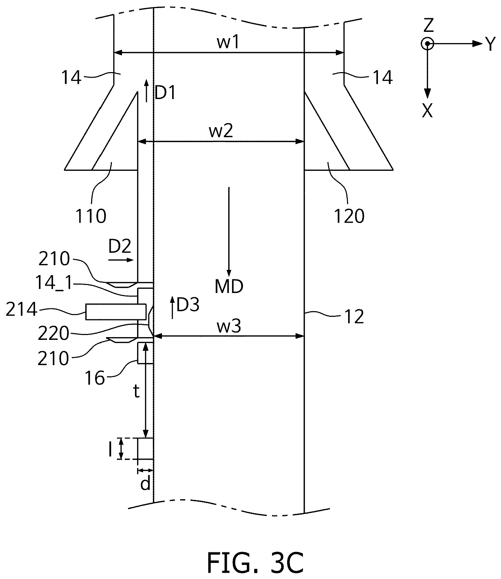

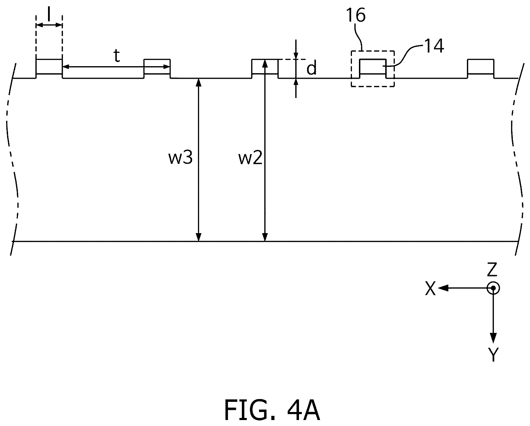

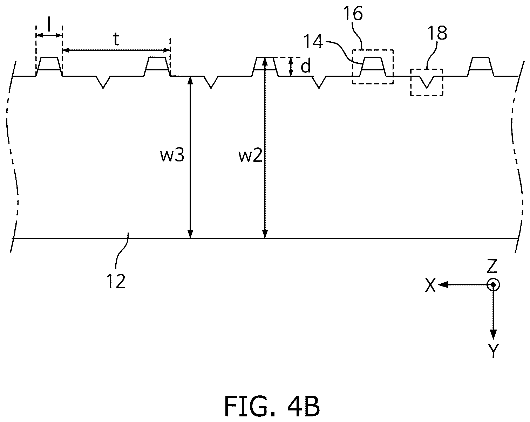

Fig. 2a is a perspective view of an apparatus for notching according to one or more example embodiments, and Fig. 2b is a perspective view an apparatus for notching according to other example embodiments. Fig. 3a is a plan view of use of notching an electrode plate having one width by an apparatus for notching according to one or more example embodiments, and Fig. 3b is a plan view of use of notching an electrode plate having the other one width by an apparatus for notching according to one or more example embodiments. Fig. 3c is a plan view of fixing a part of an uncoated portion cut in a process of notching an electrode plate by an apparatus for notching according to one or more example embodiments. Fig. 4a is a plan view of an electrode plate notched by an apparatus for notching according to one or more example embodiments, and Fig. 4b is a plan view of an electrode plate notched by an apparatus for notching according to one or more example embodiments.

Referring to Figs. 2a and 2b, an apparatus for notching 1 according to one or more example embodiments may include at least one wire cutter 100 that cuts at least one of a first side surface and a second side surface, positioned opposite to the first side surface, of the electrode plate 10. The wire cutter 100 cuts the electrode plate 10 along a first direction and at least one pattern cutter 200 cuts at least one of the first side surface and the second side surface to form a cut pattern. Here, the first direction may be a direction MD that the electrode plate 10 moves in the notching apparatus 1, and the wire cutter 100 may be disposed to face the electrode plate 10 along the first direction.

The electrode plate 10 may be supplied from the supply roll SR, formed or processed by the wire cutter 100 and/or the pattern cutter 200, and then wound by the winding roll WR or stacked by the magazine. The apparatus for notching 1 may form tab portions 16 that function as electrode tabs or are connected with a separate electrode tab by notching the electrode plate 10 that proceeds in the first direction using the wire cutter 100 and the pattern cutter 200. The electrode plate 10 may include a mixture portion 12 including an active material and an uncoated portion 14 not including an active material. The mixture portion 12 may include a positive electrode active material or a negative electrode active material depending on the type of the electrode plate 10. A region in which a mixture including an active material is coated on the substrate may be the mixture portion 12 of the electrode plate 10, and a portion other than the region on which the mixture portion 12 is coated on the substrate may be the uncoated portion 14 of the electrode plate 10. In a plan view, both side ends in a direction intersecting the movement direction MD of the electrode plate 10 may be the uncoated portions 14, and the mixture portion 12 may be positioned between the uncoated portions 14. That is, the uncoated portions 14 may be positioned on both side surfaces of the electrode plate 10.

A process of notching the electrode plate 10 by the apparatus for notching 1 to form the tab portions 16 may be performed as the electrode plate 10 moves in the first direction. The movement direction MD of the electrode plate 10 may be substantially parallel to or the same as the first direction. In the example depicted in Figs. 2a and 2b, the first direction may be an X axis direction.

The apparatus for notching 1 according to one or more embodiments may include the wire cutter 100. The wire cutter 100 may cut the uncoated portion 14 from at least one of the first side surface and the second side surface, which are positioned opposite to each other, based on the movement direction MD of the electrode plate 10 or the first direction in the apparatus for notching 1. As cutting is performed while the electrode plate 10 is moving in the first direction, a direction D1 in which the wire cutter 100 cuts the uncoated portion 14 may be opposite to the first direction. The cutting direction D1 may be direction that the wire cutter 100 moves relative to the electrode plate 10 at a speed that the electrode plate 10 and wire cutter 100 are moving relative to each other.

The wire cutter 100 may be disposed to face the electrode plate 10 along the first direction. This means that as the electrode plate 10 moves in the first direction before the electrode plate 10 is cut by the wire cutter 100, a distance of the electrode plate 10 facing the wire cutter 100 is decreased until the electrode plate 10 is in contact with the wire cutter 100. The wire cutter 100 may be a movable type or a fixed type. For example, when the electrode plate 10 does not move while being maintained under a tension between rollers SR, WR, a movable type wire cutter 100 may be used. In a case where the wire cutter 100 is a movable type, the wire cutter 100 may have a speed component in the cutting direction D1. On the other hand, in a case where the electrode plate 10 moves in a direction (or first direction), a fixed type wire cutter 100 or a movable type wire cutter 100 may be used.

A cross-section cut by the wire cutter 100 may be a plane extending in the first direction and a thickness direction of the electrode plate 10. The first direction may be an X axis direction and the thickness direction of the electrode plate 10 may be a Z axis direction. The first side surface cut by a first wire cutter 110 may be substantially flat, and the second side surface cut by a second wire cutter 120 may be substantially flat.

A cutting edge of the wire cutter 100 may be a portion that contacts the electrode plate 10 to be cut. That is, a portion of the wire cutter 100 that contacts the electrode plate 10 when the wire cutter 100 cuts the electrode plate 10 may be referred to as a cutting edge of the wire cutter 100. The electrode plate 10 contacting the cutting edge of the wire cutter 100 may be cut, and a width of the electrode plate 10 is thereby narrowed. The width of the supplied electrode plate 10 means a width of the electrode plate 10 intersecting the first direction or a width w1 of the electrode plate 10 perpendicular to the first direction. For example, in a case where the first direction is an X axis direction, the width of the electrode plate 10 means the width w1 of the electrode plate 10 as a second direction intersecting the first direction.

Referring to Fig. 2a, the cutting edge of the wire cutter 100 may be, for example, extend in the thickness direction (for example, Z direction) of the electrode plate 10. This may mean that a line connecting two points on the cutting edge of the wire cutter 100 is substantially parallel to the thickness direction of the electrode plate 10. However, the present disclosure is not limited to such an arrangement, and the cutting edge of the wire cutter 100 may be, for example, positioned to extend in a direction including a first direction component and the thickness direction component, e.g., diagonal to the first direction.

Referring to Fig. 2b, the cutting edge of the wire cutter 100 may extend in a direction including an X direction component and a Z direction component. Further, the cutting edge of the wire cutter 100 may extend in a Y direction such that a width of the electrode plate 10 is gradually decreased along a thickness direction. However, in order for the electrode plate 10 to meet the cutting edge of the wire cutter 100 to be cut as the electrode plate 10 moves along the movement direction MD, the cutting edge of the wire cutter 100 should include the first direction component, and, thus, the cutting edge of the wire cutter 100 extends in the first direction. The cutting edge of the wire cutter 100 of the apparatus for notching 1 extends along a straight line. But the present disclosure is not limited thereto, and the cutting edge of the wire cutter 100 be curved.

The wire cutter 100 may be formed from a material that includes at least one of metal, carbon steel, stainless steel, ceramic, and diamond. For example, the metal may be steel, titanium, or the like. However, the material of the wire cutter 100 is not limited to these examples and may include other materials that can cut the electrode plate 100. For example, the wire cutter 100 may be formed from a material that is harder than the material from which the electrode plate 10 is formed.

The cross-sectional shape of the wire cutter 100 may be triangular or a shape in which one side of a triangle is replaced with a curve. The cross-sectional shape may correspond to the shape of the wire cutter as seen from above the wire cutter. Moreover, the one side of the cross-sectional shape may be substantially parallel to the first direction. With such an arrangement, the electrode plate 10 may be cut to a substantially uniform width. The other side of the cross-sectional shape that includes the cutting edge of the wire cutter 100 may form a predetermined angle such that the cut electrode plate 10 is easily released from the wire cutter. Detailed descriptions of the shape of the wire cutter 100 will be provided below.

The wire cutter 100 may include the first wire cutter 110 and the second wire cutter 120. The first and second wire cutters 110, 120 may cut a first side surface and a second side surface of the electrode plate 10, respectively. For example, the first wire cutter 110 may cut the first side surface of the electrode plate 10, and at this time, may cut at least a part of the uncoated portion 14 of the first side surface. Moreover, although not illustrated, the first wire cutter 110 may cut the entirety of the uncoated portion 14 of the first side surface and a part of the mixture portion 12 that is adjacent to the uncoated portion 14. The second wire cutter 120 may cut the second side surface of the electrode plate 10, and, at this time, may cut at least a part of the uncoated portion 14 of the second side surface. In other examples, the second wire cutter 120 may cut the entirety of the uncoated portion 14 of the second side surface and a part of the mixture portion 12 adjacent to the uncoated portion 14. Therefore, on the first side surface, only the uncoated portion 14 may be disposed, and on the second side surface, the mixture portion 12 may be exposed. However, the present disclosure is not limited to such an arrangement. For example, in a case where only one wire cutter 100 is provided, the wire cutter 100 may cut the first side surface of the electrode plate 10. In another example, one wire cutter 100 may be disposed on the second side surface to cut the electrode plate 10 on which the mixture portion 12 is disposed.

Referring to Fig. 3a, the first wire cutter 110 and the second wire cutter 120 are spaced from each other. A distance w2 between the first wire cutter 110 and the second wire cutter 120 is a straight-line distance between a position where the electrode plate 10 is cut by the first wire cutter 110 and a position where the electrode plate 10 is cut by the second wire cutter 120. The straight line may be a line parallel to the second direction (for example, Y axis direction) perpendicular to the thickness direction of the electrode plate 10. The distance w2 may be less than the width w1 before the electrode plate 10 passes through the wire cutter 100, that is, the width w1 before the electrode plate 10 is cut. The electrode plate 10 may be cut to a width corresponding to the distance w2 after passing through the wire cutter 100. However, the present disclosure is not limited thereto, and when there is only one wire cutter 100, only the first side surface of the electrode plate 10 may be cut, and the electrode plate 10 may be cut into a straight-line distance between the first wire cutter 110 and the second side surface. In such an example, the mixture portion 12 may be exposed on the second side surface and the uncoated portion 14 is not provided on the second side surface, and, thus, the second side surface may not be cut by the wire cutter 100.

The first wire cutter 110 and the second wire cutter 120 may be connected by a horizontal bar. The horizontal bar may be positioned to not hinder movement of the electrode plate 10. Therefore, even when the horizontal bar is provided, the position where the electrode plate 10 is cut by the first wire cutter 110 and the position where the electrode plate 10 is cut by the second wire cutter 120 may be spaced from each other.

Referring to Fig. 3a, the distance w2 between the first wire cutter 110 and the second wire cutter 120 may be adjusted as needed. In this regard, at least one of the wire cutters 100 may move in the second direction. The second direction may be perpendicular to the first direction, which is the movement direction MD in which the electrode plate 10 moves, and the thickness direction (Z direction in Fig. 3a) of the electrode plate 10. When the first direction and the thickness direction correspond to the X axis direction and the Z axis direction, respectively, the second direction may correspond to the Y axis direction. The first wire cutter 110 may be fixed, the second wire cutter 120 may be movable or vice versa. Moreover, both of the first wire cutter 110 and the second wire cutter 120 may be movable. Therefore, the distance w2 may be adjusted, and as a result, a width w3 of the electrode plate 10 may be adjusted as needed. The width w3 of the electrode plate 10 may correspond to a width of the mixture portion in a plan view.

The distance w2 between the first wire cutter 110 and the second wire cutter 120 may be adjusted or set in advance before the electrode plate 10 is supplied by the supply roll SR. When the width w1 of the electrode plate 10 supplied by the supply roll SR is changed, the distance w2 may be adjusted to be changed. However, the present disclosure is not limited thereto, and the distance w2 may be adjusted in real time during the process of notching the electrode plate.

Unlike the apparatus for notching using a die, in the apparatus for notching 1 according to one or more example embodiments, the distance w2 between the first wire cutter 110 and the second wire cutter 120 may be adjusted. Thus, even if a size of the electrode plate 10 to be notched or a cell including thereof is changed, it may not be necessary to use a different die. That is, the apparatus for notching 1 according to one or more example embodiments may adjust a position of the wire cutter 100 in accordance with the width w3 of the electrode plate 10 to be notched or the size of the cell including thereof. Therefore, the apparatus for notching 1 having the configuration described above can solve problems in management of a dies and die quality which may be caused, for example, by abrasion of the die.

The apparatus for notching 1 according to one or more example embodiments may include at least one pattern cutter 200 that cuts at least one of the first side surface and the second side surface of the electrode plate 10 to form a cut pattern. A surface of the electrode plate 10 that is cut by the pattern cutter 200 a surface on which the uncoated portion 14 is exposed. The pattern cutter 200 may cut the uncoated portion 14 and/or the mixture portion 12 adjacent to the uncoated portion to form a plurality of cut patterns, and the cut pattern may correspond to the tab portions 16.

The cut pattern on a surface of the electrode plate 10 may form protrusions in the second direction (for example, Y axis direction). A portion excluding cutting may be removed to form a pattern. For this, the cutting direction of the pattern cutter 200 may be the first direction, which is the movement direction of the electrode plate 10, and the second direction that is perpendicular to the movement direction of the electrode plate 10 and perpendicular to the thickness direction of the electrode plate 10. For example, the first direction and the second direction, which are cutting directions of the pattern cutter 200, may be an X axis direction and a Y axis direction, respectively.

The pattern cutter 200 may include a first pattern cutting element 210 and a second pattern cutting element 220. The first pattern cutting element 210 may be disposed to face a side surface of the electrode plate 10 along the second direction. This means that as the first pattern cutting element 210 moves toward the electrode plate 10 in the second direction before the electrode plate 10 is cut by the first pattern cutting element 210, a distance of the first pattern cutting element 210 facing the electrode plate 10 decreases, and the first pattern cutting element 210 moves into contact with the electrode plate 10. The second pattern cutting element 220 may be disposed to face the electrode plate 10 along the thickness direction. This means that as the second pattern cutting element 220 moves toward the electrode plate 10 in the thickness direction before the electrode plate 10 is cut by the second pattern cutting element 220, a distance of the second pattern cutting element 220 facing the electrode plate 10 is decreases and the second pattern cutting element 220 moves into contact with the electrode plate 10.

A cross-section cut by the first pattern cutting element 210 may be substantially flat. For example, the cross-section may be a plane including the second direction and the thickness direction of the electrode plate 10. A cross-section cut by the second pattern cutting element 220 may be substantially flat. For example, the cross-section may be a plane including the first direction and the thickness direction of the electrode plate 10. At this time, the first direction may be a X axis direction, the second direction may be a Y axis direction, and the thickness direction of the electrode plate 10 may be a Z axis direction.

A cross-section of the pattern cutter 200 may be in a circular saw shape. The pattern cutter 200 may include a plurality of saw teeth that are triangluar shaped or a shape in which one side of a triangle is replaced with a curve. However, the present disclosure is not limited to such configurations, and the pattern cutter 200 may have saw teeth in other shapes that can cut the electrode plate 10. A detailed description of the plane shape of the pattern cutter 200 will be provided below.

The cutting edge of the pattern cutter 200 may be a portion where the electrode plate 10 contacts the pattern cutter 200. That is, a portion of the pattern cutter 200 that contacts the electrode plate 10 when the pattern cutter 200 cuts the electrode plate 10 may be the cutting edge of the pattern cutter 200. The electrode plate 10 that contacts the cutting edge of the pattern cutter 200 is cut, and thereby, a cut pattern may be formed.

The pattern cutter 200 may be formed from materials such as metal, carbon steel, stainless steel, ceramic, and diamond. For example, the metal may be steel, titanium, or the like. However, the material of the pattern cutter 200 is not limited to these examples, and other materials that can cut the electrode plate 10 may be used. For example, the pattern cutter 200 may include a material that is harder than the electrode plate 10.

The first pattern cutting element 210 may cut the electrode plate 10 in the second direction, and the second pattern cutting element 220 may cut the electrode plate in the first direction or the third direction, which are different from the second direction. The first direction may correspond to a direction MD in which the electrode plate 10 moves. And the second direction may be a direction intersecting a thickness direction of the electrode plate 10 or may be a direction perpendicular to the thickness direction of the electrode plate 10. In a case of the latter, the first direction, the second direction, and the thickness direction of the electrode plate 10 may correspond to the X axis direction, the Y axis direction, and the Z axis direction, respectively. The third direction may intersect the first direction and the second direction or may be a direction perpendicular to the first direction and the second direction. In a case of the latter, the first direction, the second direction, and the third direction may correspond to the X axis direction, the Y axis direction, and the Z axis direction. The third direction may correspond to the thickness direction of the electrode plate 10.

In an example, the first pattern cutting element 210 may cut the electrode plate 10 in the Y axis direction. That is, a cutting direction D2 of the first pattern cutting element 210 may be the Y axis direction as shown in Figs. 3a and 3b. The cutting direction D2 may be relative to a movement direction the electrode plate 10 and relative to a speed of the electrode plate 10. A depth d of the cut that forms the tab portion 16 corresponds to the cut made by the first pattern cutting element 210. The second pattern cutting element 220 may cut the electrode plate 10 in the Z axis direction. That is, a cutting direction D3 of the second pattern cutting element 220 may be the Z axis direction. A length of the tab portion 16 is determined by the second pattern cutting element 220, and a distance t between the tab portions 16 may be formed. A plane of the tab portion 16 formed by the first pattern cutting element 210 and the second pattern cutting element 220 may be rectangular. However, the present disclosure is not limited thereto. For example, the cutting direction D2 of the first pattern cutting element 210 may be in a plane including the X axis and the Y axis, and the tab portion 16 may thereby be formed in a parallelogram or trapezoidal shape. Various other shapes are possible by adjusting the cutting direction D2.

The second pattern cutting element 220 may cut the electrode plate 10 in the thickness direction while initially cutting the electrode plate 10. During this cut, a speed of the second pattern cutting element 220 in the first direction and a speed of the electrode plate 10 in the first direction may be substantially the same as each other. Thereafter, the second pattern cutting element 220 may substantially move at a speed in the first direction at the speed of the electrode plate 10. In an example, while the second pattern cutting element 220 cuts the electrode plate 10, the second pattern cutting element 220 may be fixed at a predetermined position for a static system (inertial system based on ground), and the electrode plate 10 may continuously move at a first speed in the first direction. In some cases, the electrode plate 10 may be cut by a distance that the electrode plate 10 moves. In another example, when cutting the electrode plate 10, the second pattern cutting element 220 may move at a second speed different from the first speed of the electrode plate 10 in the first direction with respect to a static system. The second speed may be greater than the first speed, or may be less than the first speed. The relative direction of movement may be positive or negative. Here, a negative relative direction of movement means that the second pattern cutting element 220 and the electrode plate 10 may move in opposite directions from each other in the static system. As such, the electrode plate 10 may be cut at a relative speed of the electrode plate 10 and the second pattern cutting element 220. And the cutting direction D3 may be the first direction. Therefore, a distance t between the tab portions 16 may increase by the operation of the second pattern cutting element 220.

A length I of the tab portion 16 may also be adjusted by adjusting the operation of the second pattern cutting element 220. That is, the length of the cut to the electrode plate 10 by the pattern cutter 200 may be adjusted as necessary. For example, a translational movement distance of the first pattern cutting element 210, of which cutting distance D2 is the Y axis direction, in the Y axis direction may be increased such that the depth d of the tab portion 16 is deep. In another case, a translational movement direction of the first pattern cutting element 210 in the Y axis direction may be decreased such that the depth d of the tab portion 16 is shallow. In another example, a translational movement distance of the second pattern cutting element 220 in the Z direction of the electrode plate 10 may be increased such that the distance t between the tab portions 16 is greater. This means that as the length by which the cutting edge of the second pattern cutting element 220 contacts the electrode plate 10 is increased, the distance t between the tab portions 16 is increased. In another case, the translational movement distance of the second pattern cutting element 220 in the Z axis direction may be decreased such that the tab portions 16 are formed closely to each other.

The pattern cutter 200 may be moved in the first direction at substantially the same speed as the electrode plate 10 moves in the first direction. In this case, as a relative speed of the pattern cutter 200 and the electrode plate 10 in the first direction is close to 0, in the inertial system of moving at the speed the pattern cutter 200 may appear to cut the fixed electrode plate 10. After the electrode plate 10 is cut by the pattern cutter 200, the pattern cutter 200 may move in a direction opposite to the cutting direction and return to its original position. When the pattern cutter 200 returns to the original position, the relative speed of the pattern cutter 200 and the electrode plate 10 in the first direction may not be 0.

The pattern cutter 200 of the apparatus for notching 1 according to one or more example embodiments may include a third pattern cutter. The third pattern cutter may cut the mixture portion 12 of the electrode plate 10 to form a groove portion 18. The groove portion 18 may be in a pattern.

As described above, the length I, the depth d, and the interval t of the tab portions 16 may be adjusted through the first pattern cutting element 210 and the second pattern cutting element 220, and the shapes of the tab portions 16 also may be adjusted. Unlike a notching that uses a die, in the apparatus for notching 1 according to one or more example embodiments, even if the shape, the lengths I, the depths d, or the intervals t of the electrode tabs of the electrode plate 10 are changed, it may not be necessary to manufacture a separate die. That is, the apparatus for notching 1 according to one or more example embodiments can be adjusted to accommodate different sizes of the electrode plate 10 and shapes of the tab portions 16. Moreover, the apparatus for notching 1 according to one or more example embodiments can resolve problems in management of a die abrasion to the die.

Referring to Fig. 3c, as the first pattern cutting element 210 moves in the second direction D2, when cutting the uncoated portion 14 (and/or part of mixture portion 12), a cut portion 14_1 of the uncoated portion 14 may not have an enough tension required for the subsequent cutting process. As such, in some cases when the second pattern cutting element 220 moves in the thickness direction of the electrode plate 10 and cuts the portion 14_1, there may be a problem in that the portion 14_1 or the uncoated portion 14 around the portion 14_1 is curled or folded. In order to prevent such a problem, a device 214 such as a gripper can be provided to maintain a tension by fixing outer side terminal of the portion 14_1 that is formed by two first pattern cutting elements 210.

Referring to Fig. 4a, a cut pattern in which tab portions 16 are cyclically formed on a surface of the electrode plate 10 may be checked in a plane of the electrode plate 10. Each of the tab portions 16 may include an uncoated portion 14 where an active material is not provided. Each of the tab portions 16 may be used as an electrode tab or connected to an electrode tab. The mixture portion 12 may be exposed as a trench between the tab portions 16. Referring to Fig. 4b, a pattern in which tab portions 16 having different shapes from the tab portions 16 of Fig. 4a are formed in another cycle may be checked in a plane of the electrode plate 10. Furthermore, a groove portion 18 may be formed on the first side surface and/or the second side surface of the electrode plate 10.

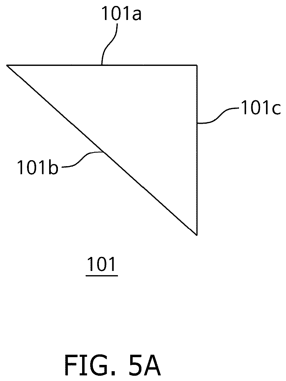

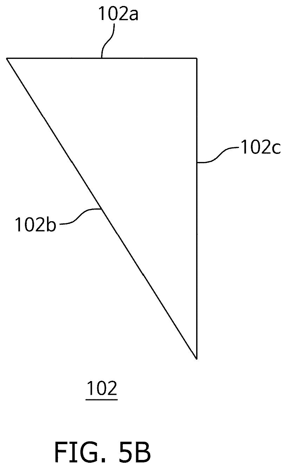

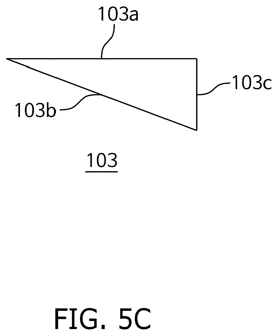

Figs. 5a to 5g are views of cross-sectional (planar) shapes of wire cutters included in an apparatus for notching according to one or more example embodiments.

As illustrated, the cross-sectional shape of the wire cutter 100 may be a triangle shape or a shape in which one side of a triangle is replaced with a curve. Referring to Figs. 5a to 5c, for example, the cross-sectional shape of the wire cutter 100 may be a right-angled triangle. Two sides 101a, 101c, 102a, 102c, 103a, 103c forming a right angle may be sides substantially parallel to the first direction and the second direction and perpendicular to each other. Two sides 101a, 101c, 102a, 102c, 103a, 103c forming a cutting edge may form an appropriate angle such that errors of the electrode plate manufacturing process are reduced, and such that the electrode plate 10 that is cut is removed and separated from the wire cutter 100.

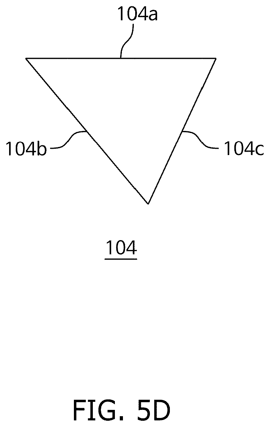

Referring to Fig. 5d, the cross-sectional shape of the wire cutter 100 may be a general triangle and not a right-angled triangle. One 104a of the three sides 104a, 104b, 104c of the triangle may be substantially parallel to the first direction.

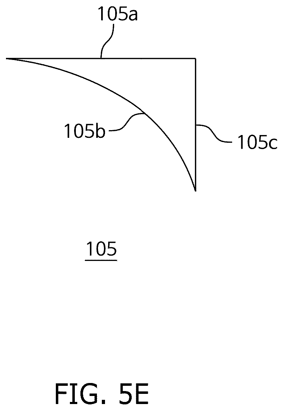

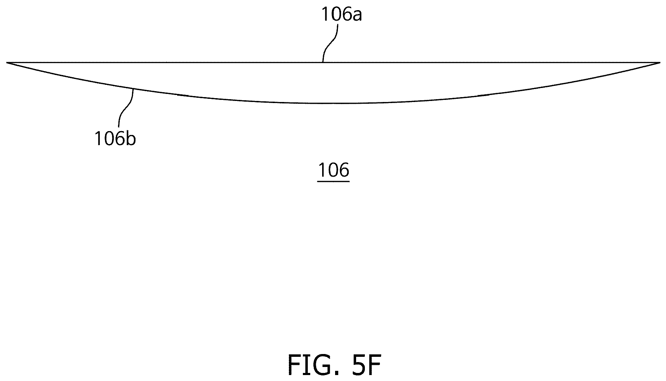

Referring to Figs. 5e and 5f, the cross-sectional shape of the wire cutter 100 may be a shape in which one or two of the sides of a triangle is replaced with one or two curves. In such cases, one 105a, 106a of sides that are not replaced 105a, 105b, 106a may be substantially parallel to the first direction. The replaced sides 105b, 106b may be curves that are convex upward or may be curves that are convex downward. The curve of the replaced side 105b, 106b may be configured such that errors of the electrode plate manufacturing process may be reduced and such that the electrode plate 10 that is cut is removed and separated from the wire cutter 100.

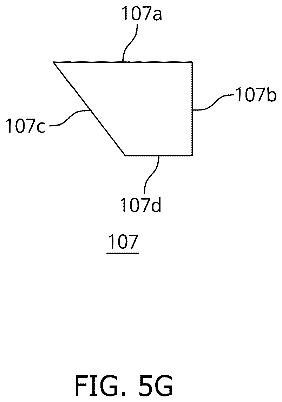

Referring to Fig. 5g, the cross-sectional shape of the wire cutter 100 may be a quadrangle with an acute angle. One 107a of the four sides 107a, 107b, 107c, 107d may be substantially parallel to the first direction, and the acute angle may be selected based on necessity. The planar (cross-sectional) shape of the wire cutter 100 may be a polygon with an acute angle other than a quadrangle. The shapes of the wire cutter 100 described above for cutting a first surface of the electrode plate 10 may be symmetric with respect to the first direction (X axis direction) as a wire cutter 100 used to cut a second surface of the electrode plate 10.

The shapes of the wire cutters 100 in Figs. 5a to 5g are examples. Wire cutters 100 according to embodiments of the present disclosure may be other shapes as long as the shape enables cutting of the electrode plate 10 moving in the first direction.

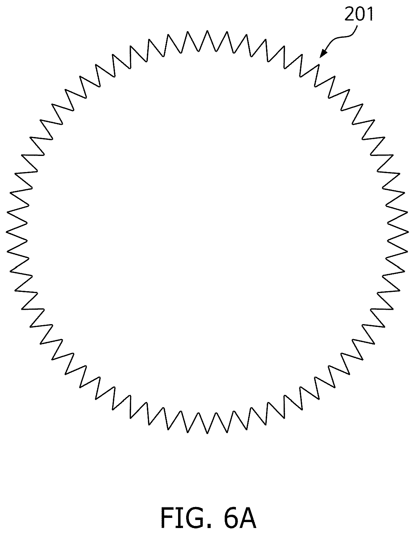

Figs. 6a to 6d are views of a cross-sectional shape of a pattern cutter included in an apparatus for notching according to one or more example embodiments.

A cross-section of the pattern cutter 200 may be a circular saw shape, and the pattern cutter 200 may include a plurality of saw teeth that are a triangle shape or a shape in which at least one of two sides of a triangle is replaced with a curve.

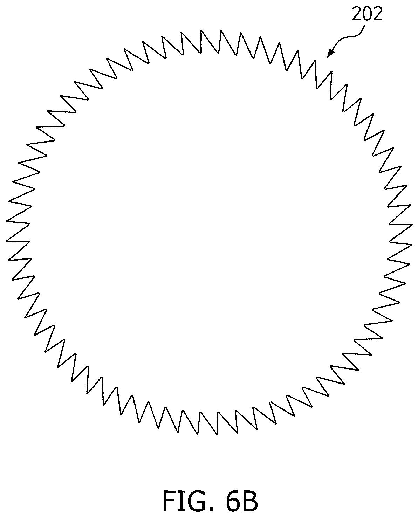

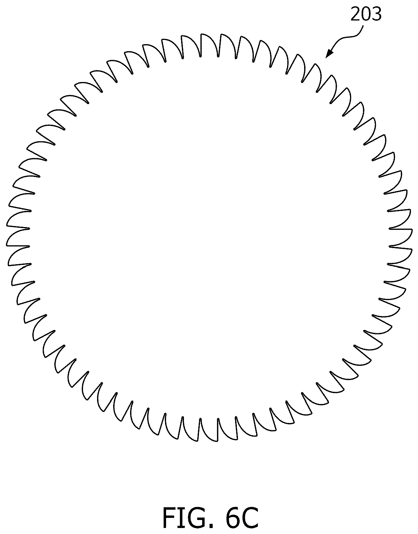

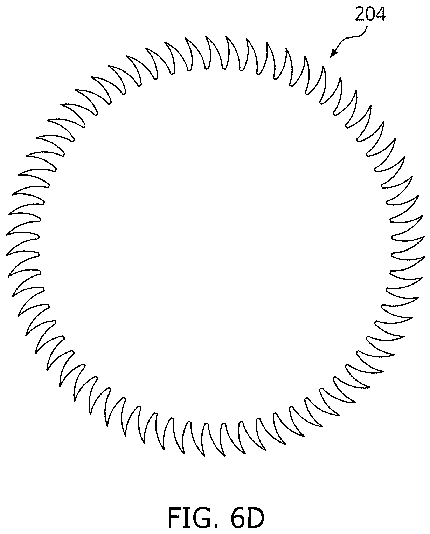

Referring to Figs. 6a and 6b, a cross-section of the sawtooth may be a triangle. Referring to Fig. 6c, the cross-section of the sawtooth may be a shape in which one side of a triangle is replaced with a curve. Moreover, referring to Fig. 6d, the cross-section of the sawtooth may be a shape in which two sides of a triangle are replaced with curves. In other embodiments, the cross-section shape of the pattern cutter 200 may be other polygon shapes, including shapes with an acute angle.

The cross-section shapes of the pattern cutter 200 depicted in Figs. 6a to 6d are merely examples, and may be other shapes that are capable of cutting of the electrode plate 10. For example, the cross-section shape of the pattern cutter 200 may be an isosceles triangle or a right triangle. One angle of the isosceles triangle or the right triangle may be formed as needed. In some cases, the pattern cutter 200 may cut a specific region of the uncoated portion 14 and/or the mixture portion 12 while moving up and down relative to a side surface of the electrode plate 10.

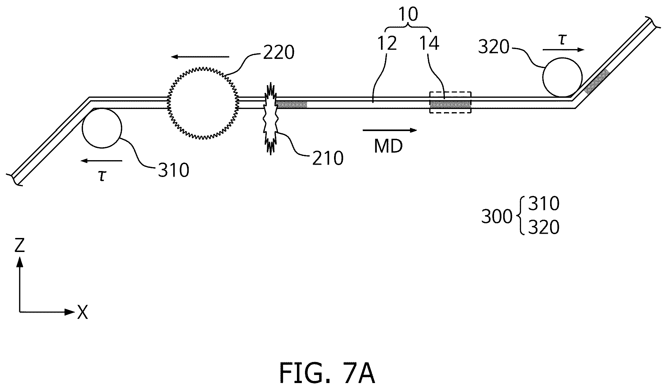

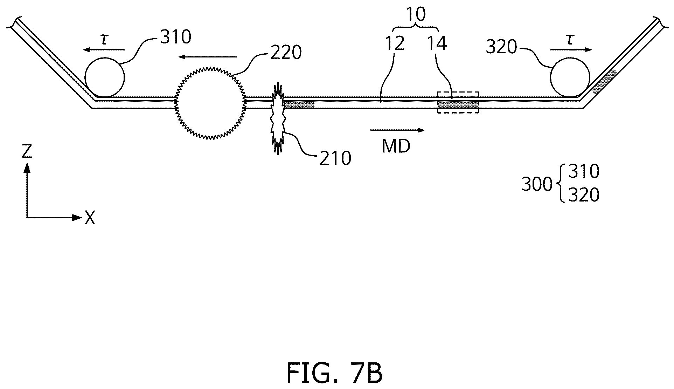

Fig. 7a is a view of an apparatus for notching that includes a plurality of rollers according to one or more embodiments. Fig. 7b is a view of an apparatus for notching that includes a plurality of rollers according to other embodiments.

Referring to Figs. 7a and 7b, the apparatus for notching 1 according to one or more example embodiments may further include a plurality of rollers 300. The rollers 300 are in contact with the electrode plate 10 and move the electrode plate 10 along the first direction. The rollers 300 may thereby adjust tension in the electrode plate 10. The rollers 300 may include a first roller 310 and a second roller 320, and at least one of the pattern cutters 200 may be disposed between the first roller 310 and the second roller 320.

When forming the tab portion 16 using the pattern cutter 200, the first and second rollers 310, 320 disposed at ends of the pattern cutter 200 along the first direction may cause tension in opposite directions. Thus, the electrode plate 10 may be more uniformly drawn in the first direction. When performing an electrode plate manufacturing process using the plurality of rollers 300, it is possible to reduce nonuniform deformation formed on the electrode plate 10 and thereby prevent the electrode plate 10 from being thrust when it is cut by the pattern cutter 200. The movement direction MD of the electrode plate 10 may be changed due to the plurality of rollers 300. For example, while the speed of the electrode plate 10 may be constant, there may occur a speed component in the thickness direction. However, by providing the roller 300, it is possible to make the electrode plate 10 move only in the first direction. In another example, in a case where there is no pattern cutter 200 between two neighboring rollers 300, the electrode plate 10 may move in a direction that is not the first direction. However, the present disclosure is not limited thereto, and it is also possible to cause the electrode plate 10 to move in the parallel direction between the two neighboring rollers 300 even when necessary.

A change in the direction of the electrode plate 10 by the roller 300 may be a direction such that a height of the electrode plate 10 raised or may be a direction where the height at which the electrode plate 10 is lowered. When the electrode plate moves in a direction not parallel to the first direction by the roller 300, the electrode plate may be arranged in the first direction by a roller 300 that comes after the change in direction. A movement path of the electrode plate 10 may be selected using various combinations of the rollers 300.

According to one or more embodiments, the first roller 310 may be disposed on an upper surface or a lower surface of the electrode plate 10, and the second roller 320 may be disposed on the other one of the upper surface or the lower surface of the electrode plate 10. According to another embodiment, the first roller 310 may be disposed on any one of the upper surface or the lower surface of the electrode plate 10, and the second roller 320 may be disposed on a surface where the first roller 310 is disposed among the upper surface or the lower surface of the electrode plate 10.

Instead of the pattern cutter 200, or along with the pattern cutter 200, the wire cutter 100 may be disposed between the first and second rollers 310, 320. With such an arrangement, when the electrode plate 10 is cut by the wire cutter 100, it is possible to reduce deformation in the electrode plate 10 and prevent a thrust of the electrode plate 10 when the electrode plate 10 is cut by the wire cutter 100.

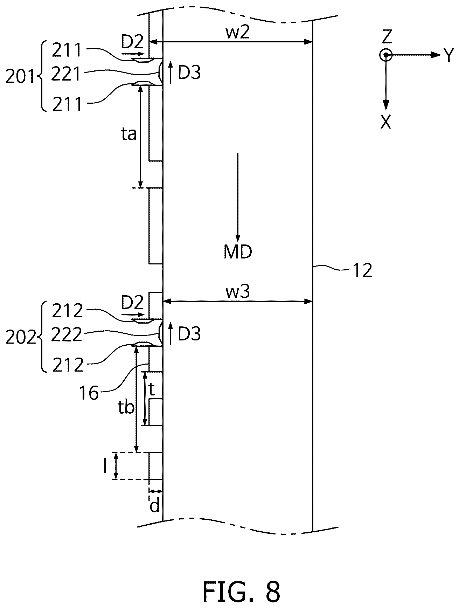

Fig. 8 is a plan view of notching an electrode plate using an apparatus for notching that includes a plurality of pattern cutters according to one or more example embodiments.

Referring to Fig. 8, in an apparatus for notching 2 according to one or more example embodiments, a plurality of pattern cutters 200 may include a first pattern cutter 201 and a second pattern cutter 202. A first pattern cutting element 211 and a second pattern cutting element 221 included in the first pattern cutter 201 may cyclically cut the electrode plate 10 at intervals ta. The first pattern cutter 201 may form a first cut pattern on the electrode plate 10. The third pattern cutting element 212 and a fourth pattern cutting element 222 included in the second pattern cutter 202 may cyclically cut the electrode plate 10 at intervals tb. The second pattern cutter 202 may form a second cut pattern on the electrode plate 10 by cutting the first cut pattern formed by the first pattern cutter 201. The formed second cut pattern may correspond to the tab portion 16.

The interval ta by the first pattern cutter 201 and the interval (tb) by the second pattern cutter 202 may be the same as each other or may be different from each other. For example, the intervals ta, tb by the first pattern cutter 201 and the second pattern cutter 202 may be the same as each other. When a center of the first cut pattern formed by the first pattern cutter 201 is cut by the second pattern cutter 202, an interval of the tab portion 16 of the electrode plate 10 wound by the winding roll WR may be constant. The interval t between the tab portions 16 may be less than the interval ta, tb by the first pattern cutter 201 and the second pattern cutter 202.

A plurality of pattern cutters 200 may include three or more pattern cutters 200. In some cases, intervals of each of the pattern cutters 200 may be different from each other, and at least a part may be the same as each other. When the intervals by the pattern cutters 200 are the same as each other, a cutting position of a subsequent pattern cutter 200 may be adjusted to divide the cut pattern formed on the pattern cutter 200 by N parts, and tab portions 16 at uniform interval t may be formed.

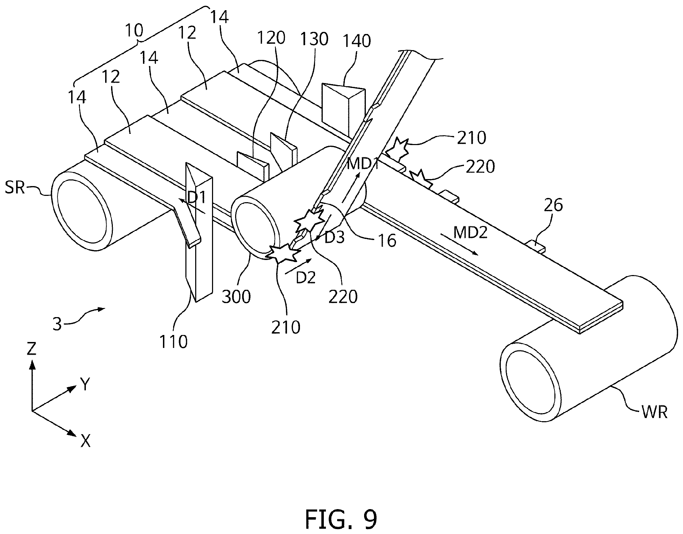

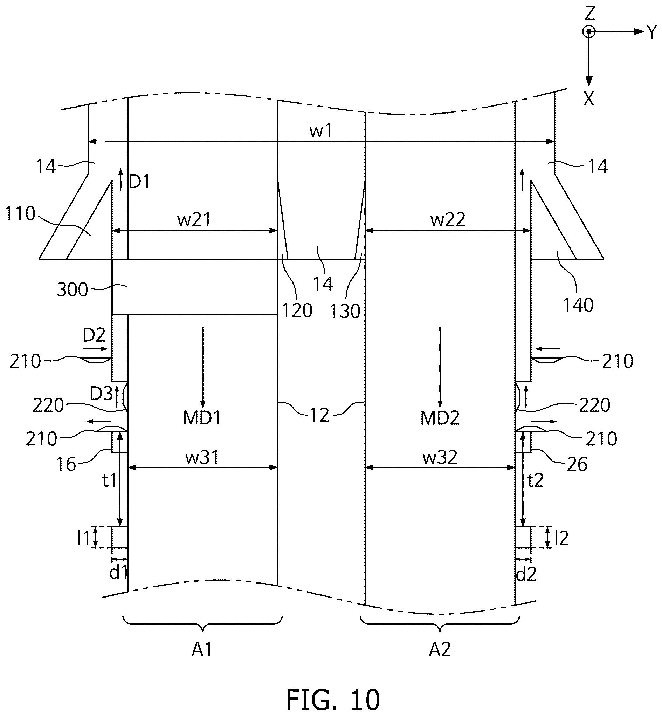

Fig. 9 is a perspective view of an apparatus for notching according to another example embodiment. Fig. 10 is a plan view of notching an electrode plate by an apparatus for notching according to one or more example embodiments.

Referring to Figs. 9 and 10, in an apparatus for notching 3 according to one or more example embodiments, a width w1 of the electrode plate 10 supplied by the supply roll SR may be two or more times larger than widths w31, w32 of the electrode plate 10 wound by the winding roll WR. In such an example, the electrode plate 10 may be notched after a plurality of electrode plates 10 are cut from the electrode plate 10 supplied by the supply roll SR. For example, the electrode plate 10 before being cut may include two mixture portions 12 that are spaced from each other, and the uncoated portion 14 may be disposed on a first side surface and a second side surface positioned opposite to the first side surface of the electrode plate 10. That is, the uncoated portion 14 may be disposed between the two mixture portions 12. The first wire cutter 110 may be disposed on the first side surface to cut the uncoated portion 14, and the second wire cutter 120 and the third wire cutter 130 may be disposed between the two uncoated portions 12 to cut the uncoated portion 14, and the fourth wire cutter 140 may be disposed on the second side surface to cut the uncoated portion 14. The uncoated portion 12 may be exposed by being cut by the second wire cutter 120 and the third wire cutter 130. After passing through the wire cutter 100, the roller 300 may be disposed on an upper portion or a lower portion of a first region A1 of the electrode plate such that the first region A1 of the electrode plate 10 is moved by the roller 300. A second region A2 of the electrode plate is not in contact with a separate roller 300. Thus, the first region A1 and the second region A2 may be separated from each other. Therefore, the movement direction MD1 of the first region A1 may be different from the movement direction MD2 of the second region A2. However, the present disclosure is not limited to such an arrangement, and in a case where the roller 300 is not provided, the two movement directions MD1, MD2 may be substantially the same as each other.

An distance w21 between the first wire cutter 110 and the second wire cutter 120 may be adjusted, and a distance w22 between the third wire cutter 130 and the fourth wire cutter 140 may separately adjusted. Therefore, a width w31 of the electrode plate 10 formed on the first region A1 may be the same as a width w32 of the electrode plate 10 formed on the second region A2, or the widths w31, w32 may be different from each other.

The tab portions 16 of the first region A1 and the tab portions 26 of the second region A2 may be formed to have the same shape and intervals or may be formed to have different shapes or/and different intervals. For example, an interval t1 between the tab portions 16 of the first region A1 may be adjusted by the pattern cutter 200 such that intervals t2 between the tab portions 26 of the second region A2 are the same as each other, or may be adjusted by the pattern cutter 200 such that intervals t2 between the tab portions 26 of the second region A2 are different from each other. In another example, the depth d1 and/or the length I1 of the tab portion 16 of the first region A1 may be adjusted by the pattern cutter 200 to be the same as the depth d2 and/or the length I2 of the tab portion 26 of the second region A2 or different from thereof. In the example embodiment, cut patterns, that is, the tab portions 16, 26 may be formed on a cross-section cut by the first wire cutter 110 and a side surface cut by the fourth wire cutter 140. However, the present disclosure is not limited thereto. In another example a tab portion may be made to be formed on a side surface cut by the second or third wire cutter 120, 130 as well.

When the mixture portions 12 of the electrode plate 10 are not spaced apart from each other, the uncoated portion 14 may not be disposed between the mixture portions 12. In such an arrangement, the first wire cutter 110 that cuts the mixture portion 12 in the first direction may be used, and the cut cross-section may correspond to a cross-section positioned opposite to a cross-section in which each tab portion 16, 26 is made.

The apparatus for notching 3 according to one or more example embodiments may be used in a slitting process for the electrode plate 10. That is, the apparatus for notching 3 can manufacture an electrode plate for a larger number of cells by cutting the electrode plate 10 into several rows. Therefore, the speed of the electrode plate manufacturing process may become faster. Moreover, in response to the electrode plate 10 having various sizes, different widths w31, w32 of the electrode plate 10, and different lengths I1, I2, depths d1, d2, and/or intervals t1, t2 of the tab portions 16, 26 may be formed in a plurality of regions of the electrode plate 10. Through this, it is possible to provide an apparatus for notching having that is not limited to a specific die size and is not prone to errors caused by the abrasion to a die.

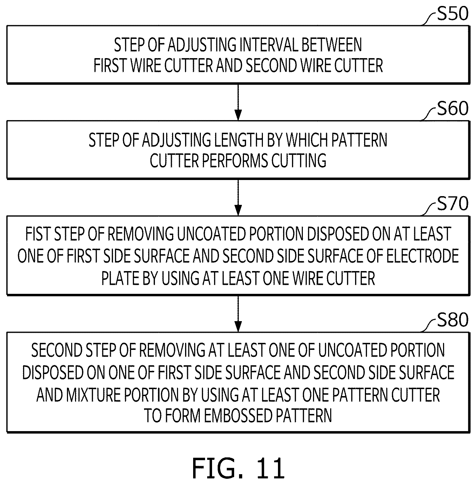

Fig. 11 is a flow chart of a method of notching according to one or more example embodiments.

Referring to Fig. 11, the method of notching according to one or more example embodiments may include a first step S100 of removing the uncoated portion 14 disposed on at least one of the first side surface of the electrode plate 10 and the second side surface positioned opposite to the first side surface by using at least one wire cutter 100, and a second step S200 of removing the uncoated portion 14 disposed on at least one of the first side surface and the second side surface and/or the mixture portion 12 in contact with one side end of the uncoated portion 14 by using at least one pattern cutter 200 to form a cut pattern. In the first step, the at least one wire cutter 100 may cut at least one of the first side surface and the second side surface of the electrode plate along the first direction in which the electrode plate moves, and the wire cutter 100 may be disposed to face the electrode plate along the first direction in which the electrode plate moves.

In the first step S100, only a part of the uncoated portion 14 may be removed on the first side surface, and the entirety of the uncoated portion 14 may be removed on the second side surface. Moreover, on the second side surface, a part of the mixture portion 12 may be removed along with the uncoated portion 14. The uncoated portion that has not been removed in the first step S100 may be further partially removed in the second step S200, and the unremoved uncoated portion 14 may form the tab portion 16.

As the electrode plate 10 may be cut while moving in the first direction, a cutting direction D1 in which the wire cutter 100 cuts the uncoated portion 14 may be the first direction. The cutting direction D1 may be a direction and at a relative speed of the wire cutter 100 based on the electrode plate 10.

In the method of notching according to one or more example embodiments, the wire cutter 100 may be fixed in the first direction. That is, a speed at which the wire cutter 100 moves based on the first direction may be substantially close to 0. At this time, the electrode plate 10 may move along the first direction at a predetermined speed and contact the cutting edge of the wire cutter 100. However, the present disclosure is not limited to such an arrangement, and the wire cutter 100 may move in the first direction.

In the method of notching according to one or more example embodiments, the cutting edge of the wire cutter 100 may extend in the thickness direction of the electrode plate.

In the method of notching according to one or more example embodiments, the wire cutter 100 may include the first wire cutter 110 and the second wire cutter 120 that are spaced from each other, and the distance between the first wire cutter 110 and the second wire cutter 120 may be adjustable. The first wire cutter 110 may cut the first side surface and the second wire cutter 120 may cut the second side surface. The method of notching according to one or more example embodiments may further include a step S50 of adjusting a distance between the first wire cutter 110 and the second wire cutter 120 depending on a width of the supplied electrode plate 10 before the first step S100. Here, the width of the supplied electrode plate 10 means a width of the electrode plate 10 intersecting the first direction, that is, a width w1 of the electrode plate 10 perpendicular to the first direction. For example, in a case where the first direction is an X axis direction, the width of the supplied electrode plate 10 is along the second, Y axis, direction.

The first step S100 of the method of notching according to one or more example embodiments may further include a step of adjusting a distance between the first wire cutter 110 and the second wire cutter 120 corresponding to the width w1 of the supplied electrode plate 10. For example, the width w2 may be adjusted to have a width having a certain difference from the width w1 of the supplied electrode plate 10. According to other examples, the distance may be adjusted such that cutting is performed to make the width of the uncoated portion 14 disposed on the first side surface of the supplied electrode plate 10 uniform.

In the method of notching according to one or more example embodiments, the pattern cutter 200 may include the first pattern cutting element 210 and the second pattern cutting element 220.

In the second step S200 in which the pattern cutter 200 forms a cut pattern, the pattern cutter 200 may move in the first direction at substantially the same speed as the electrode plate 10 moves in the first direction. As a relative speed of the pattern cutter 200 and the electrode plate 10 in the first direction is substantially close to 0, in the inertial system of moving at the speed, the pattern cutter 200 cuts the fixed electrode plate 10. After forming a cut pattern, the pattern cutter 200 may return to its original position. A step of the pattern cutter 200 returning to its original position may be included after the second step S200.

The first pattern cutting element 210 may cut the electrode plate 10 in the second direction, and the second pattern cutting element 220 may cut the electrode plate 10 in the first direction or the third direction, which is different from the second direction. The first direction may correspond to a direction in which the electrode plate 10 moves. For example, the second direction may intersect the thickness direction of the electrode plate 10 or a direction perpendicular to the thickness direction of the electrode plate 10. In the latter case, the first direction, the second direction, and the thickness direction of the electrode plate 10 may correspond to an X axis direction, a Y axis direction, and a Z axis direction, respectively. For example, the third direction may intersect the first direction and the second direction, respectively, or may be a direction perpendicular to the first direction and the second direction. That is, the first direction, the second direction, and the third direction may correspond to the X axis direction, the Y axis direction, and the Z axis direction, respectively. And the third direction may intersect the first direction and the second direction, respectively, or a direction perpendicular to the first direction and the second direction. The third direction may correspond to the thickness direction of the electrode plate 10. The electrode plate 10 may be cut in a direction perpendicular to the first direction and the thickness direction of the electrode plate 10. Moreover, the second pattern cutting element 220 may cut the electrode plate 10 in the thickness direction of the electrode plate 10 and may cut the electrode plate 10 in the first direction for adjustment of the interval of the tab portions 16.

The method of notching according to one or more example embodiments may further include a step S60 of adjusting a length by which the pattern cutter 200 performs cutting such that the shape of the cut pattern is adjusted before the first step S100. Through the length adjusting step S60, a length I, a depth d, and an interval t of the tab portions 16 may be adjusted.

The spaced distance adjusting step S50 and the cutting length adjusting step S60 may be performed simultaneously or may be performed regardless of the order.

In the method of notching according to one or more example embodiments, a groove portion 18 may be formed by the pattern cutter 200. The groove portion 18 may be formed at substantially the same interval as the interval t of the tab portions 16.

As a spaced distance between the first wire cutter 110 and the second wire cutter 120 may be adjusted, the width of the electrode plate 10 may be adjusted depending on the size of the electrode plate 10 or the cell including the electrode plate 10 without the need for a separate die. Moreover, as the length cut by the first pattern cutting element 210 and the second pattern cutting element 220 may be adjusted, it is possible to adjust the width of the electrode plate 10, the interval t between the tab portions 16, the depth d and the length I of the tab portion 16, and/or the shape of the tab portion 16 depending on the size of the electrode plate 10 or the cell including the electrode plate 10 without using a separate die. That is, the method of notching according to one or more example embodiments may provide a method of notching can resolve problems in management of a die and other problems such as abrasion to the die.

### Explanation of reference symbols

| | | | |
|---|---|---|---|
| 1: | Apparatus for notching | 10: | Electrode plate |
| 12: | Mixture portion | 14: | Uncoated portion |
| 16: | Tab portion | 18: | Groove portion |
| 100: | Wire cutter | 110: | First wire cutter |
| 120: | Second wire cutter | 200: | Pattern cutter |
| 210: | First pattern cutting element | 220: | Second pattern cutting element |

## Claims

1. An apparatus for notching (1), the apparatus comprising:
at least one wire cutter (100) that is configured to cut at least one of a first side surface of an electrode plate (10) and a second side surface of the electrode plate (10) that is opposite to the first side surface, with the cutting being along a direction (MD) in which the electrode plate (10) moves in the apparatus; and
at least one pattern cutter (200) that is configured to cut at least one of the first side surface and the second side surface to form a cut pattern in the electrode plate (10),
wherein the wire cutter (100) is positioned to face the electrode plate (10) along the direction (MD) in which the electrode plate (10) moves.

2. The apparatus for notching (1) according to Claim 1, wherein a cutting edge of the wire cutter (100) is positioned to extend in a thickness direction of the electrode plate (10).

3. The apparatus for notching (1) according to Claim 1 or 2, wherein the wire cutter (100) comprises a first wire cutter (110) that is configured to cut the first side surface and a second wire cutter (120) that is spaced from the first wire cutter (110) and configured to cut the second side surface, and
wherein the distance (w2) between the first wire cutter (110) and the second wire cutter (120) is adjustable.

4. The apparatus for notching (1) according to any one of the preceding Claims,
wherein the wire cutter (100) is configured to cut at least a part of an uncoated portion (14) of the electrode plate (10) from at least one of the first side surface and the second side surface, and
wherein the pattern cutter (200) is configured to cut at least one of the uncoated portion (14) of the electrode plate (10) disposed on at least one of the first side surface and the second side surface and a mixture portion (12) that is between the uncoated portion (14).

5. The apparatus for notching (1) according to any one of the preceding Claims, wherein the wire cutter (100) is disposed to be fixed while the electrode (10) is moving.

6. The apparatus for notching (1) according to any one of the preceding Claims, wherein each of the wire cutter (100) and the pattern cutter (200) comprises at least one of metal, carbon steel, stainless steel, ceramic, and diamond.

7. The apparatus for notching (1) according to any one of the preceding Claims, wherein the pattern cutter (200) is configured to move at a same speed as the electrode plate (10) in the direction that the electrode plate (10) moves.

8. The apparatus for notching (1) according to any one of the preceding Claims, wherein the direction that the electrode moves is a first direction (MD), and
wherein the pattern cutter (200) comprises a first pattern cutting element (210) that is configured to cut the electrode plate (10) in a second direction and a second pattern cutting element (220) that is configured to cut the electrode plate (10) in the first direction (MD) or a third direction.

9. The apparatus for notching (1) according to Claim 8, wherein the first pattern cutting element (210) is configured to face a side surface of the electrode plate (10) along the second direction, and with the second direction intersecting a thickness direction of the electrode plate (10).

10. The apparatus for notching (1) according to any one of the preceding Claims, wherein a cross-sectional shape of the wire cutter (100) is (i) triangular, (ii) a shape in which one side of a triangle is replaced with a curve, or (iii) a polygon shape with an acute angle,
wherein one side of the wire cutter (100) is parallel to the first direction (MD), and
wherein the pattern cutter (200) comprises a plurality of saw teeth that are triangular shape or a shape in which at least one of side of a triangle is replaced with a curve.

11. The apparatus for notching (1) according to any one of the preceding Claims, wherein a cross-section shape of the pattern cutter (200) is an isosceles triangle or a right triangle.

12. The apparatus for notching (1) according to any one of the preceding Claims, wherein the pattern cutter (200) comprises a first pattern cutter (201) and a second pattern cutter (202), and
wherein the second pattern cutter (202) is configured to form a second cut pattern by cutting a first cut pattern that is cut by the first pattern cutter (201).

13. An apparatus for notching (1), the apparatus comprising:
at least one wire cutter (100) that is configured to cut a first side surface of an electrode plate (10) and a second side surface of the electrode plate (10) that is opposite to the first side surface of the electrode plate (10), with the cutting being along a first direction (MD) in which the electrode plate (10) moves in the apparatus; and
at least one pattern cutter (200) that is configured to cut at least one of the first side surface and the second side surface to form a cut pattern,
wherein the wire cutter (100) is positioned to face the electrode plate (10) along the first direction (MD),
wherein a cutting edge of the wire cutter (100) is configured to extend in a thickness direction of the electrode plate (10),
wherein the wire cutter (100) comprises a first wire cutter (110) that is configured to cut the first side surface and a second wire cutter (120) that is spaced a distance (w2) from the first wire cutter (110) and is configured to cut the second side surface,
wherein the distance (w2) between the first wire cutter (110) and the second wire cutter (120) is adjustable, and
wherein the pattern cutter (200) comprises a first pattern cutting element (210) that cuts the electrode plate (10) along a second direction and a second pattern cutting element (220) that cuts the electrode plate (10) along the first direction (MD) or a third direction that is different from the second direction.

14. A method for notching comprising:
a first step (S100) of cutting an uncoated portion (14) disposed on at least one of a first side surface of an electrode plate (10) and a second side surface of the electrode plate (10) that is positioned opposite to the first side surface, the cutting being along a direction (MD) that the electrode plate (10) is moving, the cutting being performed by at least one wire cutter (100); and
a second step (S200) of removing at least one of the uncoated portion (14) disposed on one of the first side surface and the second side surface and a mixture portion (12), the removing being performed by using at least one pattern cutter (200) to thereby form a cut pattern.

15. The method for notching according to Claim 14,
wherein a cutting edge of the wire cutter (100) extends in a thickness direction of the electrode plate (10),
wherein the wire cutter (100) comprises a first wire cutter (110) that cuts the first side surface and a second wire cutter (120) that is spaced a distance (w2) from the first wire cutter (110) and cuts the second side surface, and
wherein the distance (w2) between the first wire cutter (110) and the second wire cutter (120) is adjustable.
